# EUROPÄISCHE PATENTANMELDUNG

(11) **EP 0 741 175 A2**
(43) Veröffentlichungstag der Anmeldung: **06.11.1996**
(21) Anmeldenummer: 96106516.6
(22) Anmeldetag: 25.04.1996
(51) Int. Cl.: C09D 167/08, C08G 63/49

(54) **Wässrige Alkydharzemulsionen aus nachwachsenden Rohstoffen**

(30) Priorität: 02.05.1995 DE 19515915
(71) Anmelder: HOECHST AKTIENGESELLSCHAFT, 65926 Frankfurt am Main (DE)
(72) Erfinder: Zöller, Joachim, Dr., 55128 Mainz (DE); Merten, Gerhard, 65205 Wiesbaden (DE); Urbano, Edmund, Dr., 8044 Graz (AT); Gobec, Michael, Dr., 8010 Graz (AT)

(57) **Zusammenfassung**

Wäßrige Alkydharzemulsion, enthaltend
(a) ein Alkydharz hergestellt aus
   (a1) einer Fettsäure oder einem Öl
   (a2) mindestens einer höherfunktionelle Verbindung, deren funktionelle Gruppen aus Hydroxyl- und/oder Carboxylgruppen bestehen,
(b) einem Emulgator,
dadurch gekennzeichnet, daß alle für die Komponenten (a) und (b) benötigten Rohstoffe ausschließlich aus nachwachsenden Ausgangssubstanzen hergestellt werden können.

## Beschreibung

Die vorliegende Erfindung betrifft ein Verfahren zur Herstellung von wäßrigen Dispersionen von Alkydharzen aus ausschließlich nachwachsenden Rohstoffen.

Wasserverdünnbare Lackbindemittel haben in den letzten Jahren ständig an Bedeutung gewonnen. Dieser Trend wird sich in Zukunft noch wesentlich verstärken. Maßgebend für diese Entwicklung sind vor allem zwei Gründe: einerseits die Umweltprobleme bei Verwendung von Lösungsmitteln, andererseits Rohstoffverknappung, die zu Versorgungsschwierigkeiten führen kann. Bindemittel, die ausschließlich aus nachwachsenden Rohstoffen hergestellt werden und auch frei von konventionellen Lösemitteln sind, tragen in idealer Weise den oben beschriebenen Bedenken Rechnung, da sie nicht nur besonders umweltverträglich hergestellt werden können, sondern auch biologisch abbaubar sind und nicht von Erdöl als primärem Rohstoff abhängig sind.

Unter den denkbaren Bindemittelklassen scheinen die Alkydharze am besten die oben genannten Bedingungen zu erfüllen, da die heute üblichen Alkydharze einerseits schon zu bis zu 80 % aus nachwachsenden Rohstoffen bestehen, die Synthese ohne Einsatz oder Abspaltung von schädlichen Nebenprodukten erfolgt und da sie sich andererseits mit Hilfe von geeigneten Emulgatoren relativ einfach in die wäßrige Phase überführen lassen.

Alkydharze sind überwiegend hydrophobe Substanzen, die von sich aus keine stabilen Dispersionen in Wasser bilden. Deshalb müssen Emulgatoren zugesetzt werden. Emulgatoren sind allgemein Substanzen mit amphipatischem Molekülaufbau, d.h. sie bestehen aus einem hydrophoben und einem hydrophilen Molekülteil. Infolge dieses Aufbaus reichern sich die Emulgatormoleküle in der Grenzschicht Wasser/Harz an, setzen die Grenzflächenspannung herab und ermöglichen damit die Bildung feinster Harztröpfchen in der wäßrigen Phase.

Zahlreiche Alkydharzemulsionen sind bereits bekannt, die sich im wesentlichen durch die eingesetzten Emulgatoren unterscheiden. Solche Systeme werden in den US-Patentschriften US-A 3 223 658, 3 269 967, 3 440 193 bzw. der DDR-Patentschrift DD-88 833 und den deutschen Patentschriften DE-C 27 54 141, 27 54 092, 24 40 946 und 27 54 091 beschrieben. Mit derartigen Emulgatoren bekommt man bei Zusatzmengen von 5 bis 15 %, bezogen auf die Harzmasse, Dispersionen mit brauchbarer Stabilität. Die deutsche Offenlegungsschrift DE-A 34 04 558 beschreibt Emulgatoren auf Basis von Alkylglykosiden, die in Alkydharzemulsionen verwendet werden können und die zum größten Teil aus nachwachsenden Rohstoffen bestehen.

Allen aus diesen Schriften bekannten Systemen ist gemeinsam, daß die Bindemittel und Emulgatoren zwar zum großen Teil aus nachwachsenden Rohstoffen hergestellt werden können, daß aber auch Rohstoffe auf petrochemischer Basis zur Synthese eingesetzt werden müssen.

Aufgabe der vorliegenden Erfindung war es daher gewesen, eine wäßrige Alkydharzemulsion zu entwickeln, bei der sowohl das Alkydharz wie auch der Emulgator ausschließlich aus nachwachsenden Rohstoffen aufgebaut ist.

Diese Aufgabe konnte mit der Bereitstellung der erfindungsgemäßen Alkydharze und Emulgatoren und deren erfindungsgemäßer Verwendung gelöst werden.

Gegenstand der Erfindung ist daher eine wäßrige Alkydharzemulsion, enthaltend
(a) ein Alkydharz hergestellt aus
   (a1) einer Fettsäure oder einem Öl
   (a2) mindestens einer höherfunktionellen Verbindung, deren funktionelle Gruppen ausgewählt sind aus Hydroxyl- und Carboxylgruppen, und
(b) einem Emulgator,
dadurch gekennzeichnet, daß alle für die Komponente (a) und (b) benötigten Rohstoffe ausschließlich aus nachwachsenden Ausgangssubstanzen hergestellt werden können.

Gegenstand der Erfindung ist auch ein Verfahren zur Herstellung von Beschichtungsmitteln, die aus einer wäßrigen Alkydharzemulsion und gegebenenfalls aus der Lacktechnologie bekannten Hilfs-und Zusatzmitteln bestehen.

Gegenstand der Erfindung ist schließlich auch die Verwendung der erfindungsgemäßen Bindemittelkombinationen als Bindemittel für Lacke, Beschichtungs- oder Dichtmassen.

Die erfindungsgemäß geeigneten Alkydharze (a) sind Polyester, die mit Fettsäuren modifiziert sind. Die Herstellung der Alkydharze erfolgt aus gesättigten und/oder ungesättigten Fettsäuren oder Ölen, Polyalkoholen, Polycarbonsäuren oder Hydroxycarbonsäuren. Die Fettsäuren können zumindest teilweise durch andere Monocarbonsäuren ersetzt sein.

Unter Fettsäuren werden im allgemeinen lineare oder verzweigte aliphatische Monocarbonsäuren mit 6 bis 35 C-Atomen verstanden. Die Fettsäuren können nichttrocknend oder trocknend sein. Beispiele für geeignete nicht-trocknende Fettsäuren sind gesättigte und einfach ungesättigte, lineare oder verzweigte aliphatische Monocarbonsäuren jeweils einzeln oder in Mischung, bevorzugt mit einer Kohlenstoffanzahl von 6 bis 18.

Beispiele für geeignete trocknende Fettsäuren sind ungesättigte Fettsäuren oder Fettsäuregemische, die mindestens eine mehrfach ungesättigte, lineare oder verzweigte aliphatische Monocarbonsäure mit mindestens zwei isolierten oder konjugierten Doppelbindungen enthalten und eine Jodzahl über 125 g/(100g) haben. Bevorzugt werden lineare ungesättigte Fettsäuren mit 16 bis 18 Kohlenstoffatomen.

Spezielle Beispiele für geeignete nichttrocknende Fettsäuren sind 2-Äthylhexansäure, Isononansäure, Versaticsäure oder Cocosfettsäure sowie Ölsäure. Als trocknende Fettsäuren werden beispielsweise bevorzugt ungesättigte Monocarbonsäuren mit einer Jodzahl über 125 g/(100g) und 18 Kohlenstoffatomen verstanden. Hierunter fallen besonders ungesättigte Fettsäuren mit zwei oder drei isolierten Doppelbindungen verschiedener sterischer Konfiguration und die entsprechenden "Konjuensäuren", d.h. ungesättigte Fettsäuren mit konjugierten Doppelbindungen. Solche Fettsäuren sind beispielsweise in natürlichen Ölen wie Leinöl, Sojaöl, Saffloröl, Baumwollsaatöl, Ricinusöl, Sonnenblumenöl, Erdnußöl, Holzöl und Ricinenöl enthalten. Die daraus gewonnenen ungesättigten Fettsäuren sind z.B. Leinölfettsäure, Safflorölfettsäure, Tallölfettsäure, Baumwollsaatfettsäure, Erdnußölfettsäure, Holzölfettsäure, Ricinenfettsäure oder Sonnenblumenölfettsäure.

Um die Fettsäuren in die Alkydharze einzubauen, können einerseits die Fettsäuren mit den Alkoholkomponenten verestert werden, sie können aber auch durch Umesterungsreaktionen der Öle in das Alkydharz eingeführt werden.

Es können auch sogenannte technische Öle als Fettsäuren eingesetzt werden, die im allgemeinen Mischungen von cis-Linolensäure, Linolsäure, Ölsäure und Stearinsäure sind. Die technischen Öle bzw. Fettsäuren können als solche eingesetzt werden, oder sie werden durch Umesterungsreaktionen oder nach Dehydratisierungsreaktionen (Ricinenfettsäure) in das Alkydharz eingebaut.

Bei Verwendung von mehrfach ungesättigten Fettsäuren werden besonders bevorzugt Mischungen aus isoliert und konjugiert ungesättigten Fettsäuren eingesetzt, z. B. solche mit einem Massengehalt von 10 bis 80 % konjugiert ungesättigten Fettsäuren.

Der Massengehalt an eingebauten gesättigten und ungesättigten Fettsäuren beträgt bevorzugt 20 bis 80 %, bezogen auf den Harzfestkörper. Dieser Anteil an gesättigten und ungesättigten Fettsäuren enthält besonders bevorzugt 10 bis 60 % ungesättigte Fettsäuren mit konjugierten Doppelbindungen. Für nicht vergilbende Harze werden gesättigte Monocarbonsäuren oder Fettsäuren mit einer oder zwei isolierten Doppelbindungen bevorzugt. Die gewonnenen Fettsäuren können durch fraktionierte Destillation, Isomerisierung oder Konjugierung chemisch optimiert sein. Zur Modifizierung der Eigenschaften der Alkydharze kann bis zu 15 % der Masse der ungesättigten Fettsäuren durch andere Monocarbonsäuren wie Benzoesäure, Benzoylglycin (Hippursäure), Mandelsäure, Zimtsäure oder Abietinsäure ersetzt sein.

Die höherfunktionellen natürlich vorkommenden Verbindungen (a2) enthalten jeweils mindestens zwei funktionelle Gruppen ausgewählt aus Hydroxyl- und Carboxylgruppen. In diese Gruppe fallen Dicarbonsäuren, Polycarbonsäuren, (Poly)Hydroxy(poly)carbonsäuren und Polyole mit mindestens zwei bis zu sechs Hydroxylgruppen. Die aliphatischen oder aromatischen (Poly)hydroxy-(poly)carbonsäuren enthalten mindestens eine Carboxylgruppe und mindestens zwei, bevorzugt zwei bis drei Hydroxylgruppen, oder mindestens zwei Carboxylgruppen und mindestens eine, bevorzugt eine bis drei Hydroxylgruppen. Es ist auch möglich, einen Teil oder alle Carbonsäuren in Form ihrer Anhydride einzusetzen. Die einzelnen Verbindungen der Komponente (a2) und ihre Mengen werden so gewählt, daß ihre mittlere Funktionalität in der Mischung größer als 2 ist.

Als Dicarbonsäuren aus nachwachsenden Rohstoffen können einerseits die gesättigten Dicarbonsäuren wie z. B. Oxalsäure, Malonsäure, Bernsteinsäure, Glutarsäure und Adipinsäure, als auch ungesättigte Carbonsäuren, wie z. B. Fumarsäure, eingesetzt werden.

Als Hydroxycarbonsäuren werden Glykolsäure, Milchsäure, Ricinolsäure, Gluconsäure und Glucuronsäure, Salicylsäure und Gallussäure genannt; besonders geeignet sind auch Hydroxypolycarbonsäuren wie z. B. Äpfelsäure, Citronensäure, Weinsäure, Zuckersäure und Schleimsäure.

Als Polyole können z.B. Glycerin und Kohlenhydrate oder deren Derivate wie Adonit, Arabit, Sorbit, Mannit, Glucose, Fructose eingesetzt werden.

Als Emulgatoren lassen sich Fettsäurederivate, Derivate von Kohlehydraten (Zuckern) und Polypeptide sowie deren Derivate verwenden. Geeignete Emulgatoren sind z.B. Alkali- oder Aminsalze der Fettsäuren, Alkylglykoside, wie sie z.B. in DE-A 34 04 558 beschrieben sind, Alkylpolysaccharide, Sorbitanmono- und diester, äthoxylierte Sorbitanester, Sorbithexaester, Fettsäuregluconamide, Fettsäuretauride, Glykolipide, Lipopeptide, Phospholipide und polymere Biotenside wie z. B. Lecithin, Casein oder "Emulsan", ein Komplex aus einem Protein und einem Lipopolyheterosaccharid. Es können auch Mischungen aus diesen Tensiden eingesetzt werden.

Die Herstellung der Alkydharze kann durch Polykondensation nach bekannten Verfahren erfolgen, wie sie beispielsweise in S. Paul, Surface Coatings, S. 70 bis 139, John Wiley & Sons, New York, 1985, beschrieben sind.

Die Polykondensation kann durch Erwärmen in der Schmelze oder im Azeotropverfahren unter Wasserabspaltung durchgeführt werden. Die gewünschte Zahl von Hydroxyl- und Säuregruppen kann durch geeignete Wahl der Äquivalenzverhältnisse, eine geeignete Reaktionsführung und gegebenenfalls ein stufenweises Arbeiten eingeführt werden. Die geeigneten Verfahrensbedingungen und Auswahlkriterien sind dem Fachmann geläufig.

Bevorzugt weisen die erfindungsgemäßen Alkydharze Hydroxylzahlen von 1 bis 80 mg/g, Säurezahlen von 1 bis 20 mg/g oder Öllängen von 10 bis 80 % auf.

Besonders bevorzugt werden Alkydharze mit Hydroxylzahlen von 20 bis 70 mg/g, Säurezahlen von 2 bis 15 mg/g oder Öllängen von 50 bis 70 %.

Zur Herstellung der Alkydharzemulsionen können zunächst diese Alkydharze mit den oben beschriebenen Emulgatoren oder Emulgatordispersionen gemischt werden. In den Gemischen liegen 40 bis 97, vorzugsweise 50 bis 95 Gew.-Teile der genannten hydrophoben Alkydharze in Abmischung mit 3 bis 60, vorzugsweise 5 bis 50 Gew.-Teilen der genannten Emulgatoren vor. Die Herstellung der Gemische kann durch einfaches Abmischen der Kunstharze mit den Emulgatoren erfolgen.

Zur Herstellung der erfindungsgemäßen wäßrigen Alkydharzdispersionen werden die erfindungsgemäßen Gemische in Wasser dispergiert, was sowohl durch einfaches Einrühren von Wasser in die vorgelegte Mischung der Kunstharze mit dem Emulgator mittels üblicher Dissolver oder Rührer, wie auch durch Eingießen der Mischung in Wasser unter heftigem Rühren erfolgen kann. Gegebenfalls kann zunächst ein Teil des Wassers zu der oben beschriebenen Mischung gegeben werden und dann diese Mischung unter Rühren in die Restmenge Wasser gegossen werden. Es können auf diese Weise stabile Öl-in-Wasser-Emulsionen erhalten werden.

Zur Herstellung der Alkydharzemulsion kann auch zunächst eine wäßrige Lösung des Emulgators hergestellt werden, in die dann unter starker Scherung das Alkydharz eingerührt wird.

Die auf diese Weise erhaltenen wäßrigen Dispersionen sind wertvolle wäßrige Bindemittel für Überzugsmittel. Sie können als solche oder in Kombination mit den aus der Lacktechnologie bekannten Hilfs- und Zusatzmitteln wie z.B. Füllstoffen, Pigmenten, Lösungsmitteln, Sikkativen, Verlaufshilfsmitteln zur Herstellung von Beschichtungen auf beliebigen Substraten verwendet werden.

Als Pigment sind die üblichen Pigmente geeignet, wie sie beispielsweise in DIN 55 944 beschrieben sind. Es werden beispielsweise Ruß, Titandioxid, monodisperses Siliciumdioxid, Aluminiumsilikat, Metallpulver oder -plättchen, organische und anorganische Farbpigmente, Korrosionsschutzpigmente, wie Blei- und Chromatverbindungen, und Metalleffektpigmente eingesetzt. Zusätzlich zu den Pigmenten und Füllstoffen können gegebenenfalls übliche organische Farbstoffe eingesetzt werden. Ebenfalls ist es möglich, Anteile von vernetzten organischen Mikroteilchen zuzusetzen.

Die Verfahren zur Herstellung der Überzugsmittel aus den Einzelkomponenten sind bekannt. Beispielsweise ist es möglich, die Pigmente in einem besonders geeigneten Anreibeharz zu dispergieren und gegebenenfalls auf die notwendige Kornfeinheit zu vermahlen. Eine andere Arbeitsweise sieht vor, die Pigmente in der wäßrigen Dispersion der Bindemittelkomponente zu vermahlen.

Dabei ist darauf zu achten, daß während des Mahlprozesses die Stabilität der wäßrigen Dispersion nicht beeinflußt wird. Nach dem Dispergieren der Pigmente ist es möglich, weitere Bindemittelanteile zuzufügen. Dabei kann es sich um die gleiche oder um eine andere der erfindungsgemäßen fremdemulgierten Alkydharzdispersionen handeln. Gegebenenfalls können weitere lacktechnische Hilfsmittel zur Beeinflussung von Eigenschaften wie z.B der Dispergierbarkeit, zugesetzt werden.

Gemäß einer weiteren Arbeitsweise mischt man die fremdemulgierten Alkydharze oder gegebenenfalls andere übliche Pastenharze zunächst mit wenig Wasser, gegebenenfalls unter Zugabe von Füllstoffen, Pigmenten, Farbstoffen und dergleichen, und verarbeitet diese Mischung auf einem Walzenstuhl oder in einer Kugelmühle zu einer Paste. Aus dieser kann dann durch Verdünnen mit weiterem Wasser und gegebenenfalls unter Zugabe weiterer Harzemulsion und Additiven die gebrauchsfertige Lackzubereitung hergestellt werden.

Die erfindungsgemäßen Überzugsmittel können durch übliche Techniken, wie z.B Tauchen, Spritzen, Rollen, auf die zu lackierenden Materialien aufgetragen werden. Danach vernetzt der aufgetragene Film durch oxidative Trocknung.

Die applizierten Schichtdicken richten sich nach dem Verwendungszweck des Überzugsmittels. Beispielsweise weisen Klarlacküberzüge eine Schichtdicke bis zu 60 µm auf, pigmentierte Basis- oder Decklacküberzüge 10 bis 50 µm, Überzüge als Füller oder Steinschlagschutzüberzüge eine Schichtdicke von 30 bis 100 µm und Überzüge als Korrosionsschutzgrundierung eine Schichtdicke von 20 bis 70 µm.

Als Substrate sind beliebige Untergründe geeignet, beispielsweise Metallsubstrate, wie Eisen, Aluminium oder Zink, nichtmetallische Substrate, wie mineralische Substrate (z.B Beton, Glas), Holz, Papier, Pappe, Textilien, Kunststoffsubstrate, wie Polyolefine, Polycarbonate, Polyurethane sowie gegebenenfalls mit Vorbeschichtungen versehene Substrate. Bei der Applikation kann auf bereits vorher beschichtetes Substrat aufgetragen werden, dessen Beschichtung vor der Zweitapplikation getrocknet oder vernetzt wurde.

Das erfindungsgemäße Überzugsmittel eignet sich auch zum Einsatz in der Mehrschichtlackierung. Dabei können je nach Pigmentierung beispielsweise Klarlacküberzugsmittel, Basislack-, oder Decklacküberzugsmittel sowie Steinschlagschutz-Überzugsmittel, Füller oder Primer hergestellt werden. Bevorzugt ist die Verwendung als Klarlacküberzugsmittel, aufgetragen auf eine Basisschicht auf Basis eines wäßrigen oder lösemittelhaltigen Überzugsmittels. Besonders bevorzugt ist die Verwendung als pigmentierter Decklack. Die so erhaltenen Überzüge zeichnen sich durch eine hohe Kratzfestigkeit, durch ein hohes Glanzhaltungsvermögen sowie durch eine erhöhte Beständigkeit aus.

Nach Verdunsten des Wassers kann die Vernetzung und Härtung der Überzüge durch den Luftsauerstoff oder (Hydro)-Peroxide katalysiert mit Metallsalzen von Sikkativsäuren oder anderen Sikkativen bei Temperaturen zwischen Raumtemperatur und 250 °C erfolgen.

Die folgenden Beispiele erläutern die Erfindung. Teile und Prozentangaben bezeichnen Massengehalte, sofern nicht anderes angegeben ist.

### Beispiele

### Alkydharze

### A1

600 g Sojaöl und 170 g Glycerin werden mit 0,05 g LiOH und 0,3 g Triphenylphosphit 3 Stunden bei 250 °C unter Stickstoff gerührt, bis sich eine Probe 1:1 in Äthanol klar löst. Dann wird unter Rühren bei 250 °C 105 g Bernsteinsäureanhydrid zugegeben. Nach Erreichen einer Säurezahl unter 5 mg/g werden weitere 110 g Bernsteinsäureanhydrid zugegeben. Hat man wiederum eine Säurezahl unter 5 mg/g erreicht, wird auf 160 °C gekühlt und 100 g Kolophonium zugegeben. Nach ca. 4 Stunden bei 250 °C, einer Destillatmenge von ca. 41 g und einer Säurezahl von 3 bis 5 mg/g wird die Kochung beendet. Man erhält ein 100 %iges Alkydharz einer Öllänge von 60 % und einer theoretischen OH-Zahl von 60 mg/g.

### A2

600 g Sojaöl und 150 g Glycerin werden mit 0,05 g LiOH und 0,3 g Triphenylphosphit 3 Stunden bei 250 °C unter Stickstoff gerührt, bis sich eine Probe 1:1 in Äthanol klar löst. Dann wird unter Rühren bei 250 °C 105 g Bernsteinsäureanhydrid zugegeben. Nach Erreichen einer Säurezahl unter 5 mg/g werden weitere 110 g Bernsteinsäureanhydrid zugegeben. Dann heizt man langsam auf 270 °C. Nach ca. 5 Stunden, einer Destillatmenge von ca. 38 g und bei Erreichen einer Säurezahl von 6 bis 8 mg/g wird die Kochung beendet. Man erhält ein 100 %-iges Alkydharz einer Öllänge von 67 % und einer theoretischen OH-Zahl von 42 mg/g.

### A3

600 g Sojaöl, 143 g Glycerin und 150 g einer 70 %igen wäßrigen Sorbitlösung werden mit 0,05 g LiOH und 0,3 g Triphenylphosphit 3 Stunden bei 250 °C unter Stickstoff gerührt. Dann wird unter Rühren bei 270 °C portionsweise 40 g Bernsteinsäureanhydrid zugegeben, bis der Ansatz einphasig ist. Dann wird 100 g Bernsteinsäureanhydrid zugegeben und weiter bei 270 °C gerührt. Nach Erreichen einer Säurezahl unter 5 mg/g werden weitere 75 g Bernsteinsäureanhydrid zugegeben. Nach ca. 6 Stunden, einer Destillatmenge von ca. 82 g und nach Erreichen einer Säurezahl von 8 bis 10 mg/g wird die Kochung beendet. Man erhält ein 100 %iges Alkydharz einer Öllänge von 63 %.

### A4

600 g Sojaöl und 160 g Glycerin werden mit 0,05 g LiOH und 0,3 g Triphenylphosphit 3 Stunden bei 250 °C unter Stickstoff gerührt, bis sich eine Probe 1:1 in Äthanol klar löst. Dann wird unter Rühren bei 250 °C 105 g Bernsteinsäureanhydrid zugegeben. Nach Erreichen einer Säurezahl unter 5 mg/g wird auf 160 °C erhitzt; dann werden 140 g Äpfelsäure zugegeben. Nach 3 Stunden bei 160 °C heizt man langsam auf 240 °C. Nach ca. 5 Stunden, bei Erreichen einer Säurezahl von 6 bis 8 mg/g wird die Kochung beendet. Man erhält ein 100 %iges Alkydharz einer Öllänge von 65 %.

### A5

600 g Sojaöl, 520 g Sorbit 70 %ig und 100 g Bernsteinsäureanhydrid werden mit 0,05 g LiOH und 0,3 g Triphenylphosphit unter Stickstoff erhitzt. Bei Temperaturen bis zu 230 °C wird dann unter Destillation von 245 g Reaktionswasser kondensiert. Nach Erreichen einer Säurezahl unter 5 mg/g werden weitere 150 g Bernsteinsäureanhydrid und 155 g ®Ocenol HD (ungesättigter Fettalkohol) zugegeben. Durch weitere Kondensation bis zu einer Säurezahl von 5 mg/g bei Temperaturen bis zu 220 °C und Destillation von weiteren 27 g Reaktionswasser erhält man ein 100 %iges Alkydharz.

### Alkydharzemulsionen

### E 1

Zu 200 g des Alkydharzes aus Beispiel A1 werden 16 g Sojaölfettsäure und 3 g 25 %iges Ammoniakwasser zugegeben und bei 70 °C ca. 60 min gerührt, bis die Mischung homogen ist.

Dann wird 175 g auf 70 °C erwärmtes E-Wasser sehr langsam unter heftigem Rühren zugetropft (ca. 4 Stunden). Man erhält eine milchige, viskose Dispersion mit einem Festkörpermassengehalt von 55 %.

### E 2

Zu 200 g des Alkydharzes aus Beispiel A2 werden 30 g C-12-Glucamid und 0,5 g 25 %iges Ammoniakwasser zugegeben und bei 70 °C ca. 60 min gerührt, bis die Mischung homogen ist.

Dann wird 210 g auf 70 °C erwärmtes E-Wasser sehr langsam unter heftigem Rühren zugetropft (ca. 4 Stunden). Man erhält eine milchige, viskose Dispersion mit einem Festkörpermassengehalt von 52 %.

### E 3

Zu 200 g des Alkydharzes aus Beispiel A3 werden 20 g Sojaölfettsäure, 6 g Sojaglucamid und 19 g 25 %iges Ammoniakwasser zugegeben und bei 70 °C ca. 60 min gerührt, bis die Mischung homogen ist.

Dann wird 257 g auf 70 °C erwärmtes E-Wasser sehr langsam unter heftigem Rühren zugetropft (ca. 4 Stunden). Man erhält eine milchige, viskose Dispersion mit einem Festkörpermassengehalt von 45 %.

### E 4

Zu 200 g des Alkydharzes aus Beispiel A4 werden 16 g Leinölfettsäuretaurid und 0,5 g 25 %iges Ammoniakwasser zugegeben und bei 70 °C ca. 60 min gerührt, bis die Mischung homogen ist.

Dann wird 200 g auf 70 °C erwärmtes E-Wasser sehr langsam unter heftigem Rühren zugetropft (ca. 4 Stunden). Man erhält eine milchige, viskose Dispersion mit einem Festkörpermassengehalt von 52 %.

## Patentansprüche

1. Wäßrige Alkydharzemulsion, enthaltend
(a) ein Alkydharz hergestellt aus
(a1) einer Fettsäure oder einem Öl
(a2) mindestens einer höherfunktionellen Verbindung, deren funktionelle Gruppen aus Hydroxyl- und/oder Carboxylgruppen bestehen, und
(b) einem Emulgator,
dadurch gekennzeichnet, daß alle für die Komponenten (a) und (b) benötigten Rohstoffe ausschließlich aus nachwachsenden Ausgangssubstanzen hergestellt werden können.

2. Wäßrige Alkydharzemulsion nach Anspruch 1, dadurch gekennzeichnet, daß zur Herstellung des Alkydharzes als Komponente (a1) gesättigte oder einfach ungesättigte, lineare oder verzweigte aliphatische Monocarbonsäuren jeweils einzeln oder in Mischung verwendet werden.

3. Wäßrige Alkydharzemulsion nach Anspruch 2, dadurch gekennzeichnet, daß Monocarbonsäuren mit 6 bis 18 Kohlenstoffatomen eingesetzt werden.

4. Wäßrige Alkydharzemulsion nach Anspruch 1, dadurch gekennzeichnet, daß zur Herstellung des Alkydharzes als Komponente (a1) mehrfach ungesättigte, lineare oder verzweigte aliphatische Monocarbonsäuren mit mindestens zwei isolierten oder konjugierten Doppelbindungen jeweils einzeln oder in Mischung verwendet werden.

5. Wäßrige Alkydharzemulsion nach Anspruch 4, dadurch gekennzeichnet, daß zur Herstellung des Alkydharzes als Komponente (a1) mehrfach ungesättigte Fettsäuren mit 16 bis 18 Kohlenstoffatomen eingesetzt werden.

6. Wäßrige Alkydharzemulsion nach Anspruch 1, dadurch gekennzeichnet, daß zur Herstellung des Alkydharzes als Komponente (a1) Fettsäuremischungen in Form von natürlichen Ölen eingesetzt werden.

7. Wäßrige Alkydharzemulsion nach Anspruch 1, dadurch gekennzeichnet, daß die Verbindungen gemäß (a2) ausgewählt sind aus mehrfunktionellen aliphatischen Hydroxyverbindungen mit mindestens zwei bis zu 6 Hydroxylgruppen, aliphatischen gesättigten und ungesättigten sowie aromatischen Dicarbonsäuren, und Hydroxycarbonsäuren mit jeweils mindestens einer Hydroxylgruppe und einer Carboxylgruppe, wobei die mittlere Funktionalität der Komponente (a2) größer als 2 ist.

8. Wäßrige Alkydharzemulsion nach Anspruch 7, dadurch gekennzeichnet, daß die Komponente (a2) aliphatische oder aromatische Hydroxycarbonsäuren enthält, die entweder eine Carboxylgruppe und mindestens zwei Hydroxylgruppen oder zwei oder mehr Carboxylgruppen und mindestens eine Hydroxylgruppe enthalten.

9. Wäßrige Alkydharzemulsion nach Anspruch 1, dadurch gekennzeichnet, daß die Emulgatoren ausgewählt sind aus Fettsäurederivaten, Derivaten von Kohlehydraten und Polypeptiden.

10. Wäßrige Alkydharzemulsion nach Anspruch 1, dadurch gekennzeichnet, daß das Alkydharz eine OH-Zahl von 1 bis 80 mg/g aufweist.

11. Wäßrige Alkydharzemulsion nach Anspruch 1, dadurch gekennzeichnet, daß das Alkydharz eine Säurezahl von 1 bis 20 mg/g aufweist.

12. Wäßrige Alkydharzemulsion nach Anspruch 1, dadurch gekennzeichnet, daß das Alkydharz eine Öllänge von 40 bis 80 % aufweist.

13. Überzugsmittel, enthaltend wäßrige Alkydharzemulsionen nach Anspruch 1.

14. Verwendung von Überzugsmitteln nach Anspruch 13 zur Herstellung von Einschicht- oder Decklacken.

15. Verwendung von Überzugsmitteln nach Anspruch 13 zur Herstellung von Grundierungen.
